# EUROPEAN PATENT SPECIFICATION

(11) **EP 4 269 254 B1**
(45) Date of publication and mention of the grant of the patent: **23.07.2025**
(21) Application number: 22400002.6
(22) Date of filing: 28.04.2022
(51) Int. Cl.: B64D 45/00, B64F 1/00

(54) **A GROUND SUPPORT EQUIPMENT SYSTEM FOR USE ON AN AIRCRAFT**
BODENUNTERSTÜTZUNGSAUSRÜSTUNG ZUR VERWENDUNG FÜR EIN FLUGZEUG
SYSTÈME D'ÉQUIPEMENT DE SUPPORT TERRESTRE DESTINÉ À ÊTRE UTILISÉ À BORD D'UN AÉRONEF

(43) Date of publication of application: 01.11.2023
(73) Proprietor: AIRBUS HELICOPTERS DEUTSCHLAND GmbH, 86609 Donauwörth (DE); Airbus Helicopters, 13725 Marignane Cedex (FR)
(72) Inventor: Vayssiere, Aurélien, D-86694 NIEDERSCHÖNENFELD GT FELDHEIM (DE); Schneele, Tobias, D-86720 NÖRDLINGEN (DE); Fruitet, Pierre, F-30170 POMPIGNAN (FR); Untiedt, Martin, D-86663 ASBACH-BÄUMENHEIM (DE); Goettling, Susanne, D-86462 LANGWEID A. LECH (DE); Schindler, Armin, D-86753 MÖTTINGEN (DE); Vazquez-Gonzalez, Ainhoa, D-86152 AUGSBURG (DE)
(74) Representative: Pouillot, Laurent Pierre Paul

(56) References cited:
- EP-A1- 3 546 369
- CN-A- 109 969 414
- CN-U- 210 162 267
- US-A- 2 417 636
- ANONYMOUS: "Radio Frequency Identification (RFID) in Airline Operations and Maintenance", 28 January 2022 (2022-01-28), pages 1 - 4, XP055961615, Retrieved from the Internet <URL:https://skybrary.aero/articles/radio-frequency-identification-rfid-airline-operations-and-maintenance> [retrieved on 20220916]

## Description

The present invention relates to a ground support equipment system for use on an aircraft. The present invention further relates to an aircraft configured for use with such a ground support equipment system, as well as a method of mounting such a ground support equipment system to an aircraft parked on ground.

Sensitive technical components of aircrafts which may be exposed to environmental conditions, in particular rain, wind, snow, frost, sand, and/or salt conditions, must be protected against such environmental conditions when the aircrafts are parked on ground for a predetermined period of time or when they are transported from respective final assembly lines to customer centers. This may be achieved by mounting ground support equipment modules of a given ground support equipment system to the sensitive technical components. The ground support equipment modules may comprise blanks and/or covers that are e. g. mounted to pitot sensors, environmental control system air intakes, starter generator and air-cooled oil cooler air inlets, engine air intakes, exhaust ejectors, and/or drive shaft flanges.

By way of example, the document US 2 609 164 A describes an engine cover adaptable to fit over an aircraft engine to protect it from salt spray, ice, and water encountered on aircraft carriers. The engine cover is formed as a sectional cover of fabric combined with a brace which may be quickly and removably attached to a given engine propeller blade.

The document US 2 417 636 A describes an engine heating cover system. The system comprises a cover for an airplane engine, which can be applied to a warm engine of a plane when it returns to a station to keep the engine thereof warm, or can be applied to a cold engine to warm it up, and then keep it warm and ready for instant use. The cover can be rapidly and easily applied to an engine, can be easily adjusted to the specific engine, and can be very quickly removed.

However, in general respective ground support equipment modules must be removed from associated sensitive technical components prior to ground run and/or flight operation of an aircraft in order to avoid damages to the sensitive technical components or even an accident of the aircraft. Nevertheless, some particular ground support equipment modules may e. g. not be visible to a pilot of the aircraft during a pre-flight check performed by the pilot. For instance, such particular ground support equipment modules may be installed inside respective engine compartments and/or behind respective inlet barrier filters of the engines of the aircraft. Unfortunately, if not removed prior to ground run and/or flight operation of the aircraft, these particular ground support equipment modules may cause incidents such as overheating and loss of the engines.

In order to avoid any even involuntary overlooking of ground support equipment modules which are mounted to sensitive technical components of an aircraft, the ground support equipment modules may be provided with some visible alerting means, such as colored flags. However, in particular cases the pilot may not see such colored flags and, thus, not notice that respective ground support equipment modules are mounted to associated sensitive technical components. For instance, if it is raining on a helicopter during a pre-flight check performed by the pilot, respective colored flags of bleed valve covers may stick to the top of the helicopter's engine cowlings such that they are not visible to the pilot from ground.

Other visible alerting means are e. g. described in the document US 8 256 703 B1 which illustrates a tether assembly for use on a parked aircraft. The tether assembly interconnects pitot tube covers with a respective landing gear lock pin thereby assuring removal of both the covers and the lock pin as part of the aircraft pre-flight check list.

The document EP 3 546 369 A1 describes cover detection systems, controllers, and aircraft. The aircraft includes the controller and parts of the cover detection systems. A cover detection system includes an engine, a first sensor, an engine cover assembly, and a controller. The engine has moving parts and defines a fluid opening. The fluid opening exposes the moving parts to an ambient environment. The first sensor component is located proximate to the engine. The engine cover assembly includes an engine cover and a second sensor. The engine cover is configured to cover the fluid opening. The second sensor component is attached to the engine cover and is configured to interact with the first sensor component. The controller is configured to determine whether the engine cover is installed on the engine based on an interaction between the first sensor component and the second sensor component.

The document CN 210 162 267 U describes an aircraft undercarriage safety pin and pitot tube sleeves detection device. The detection device comprises a detection box independent of an airplane, wherein a first sensor for sensing the movement of the airplane and slots are arranged on the detection box. The number of the slots is consistent with the number of safety pins and pitot tube sleeves of an undercarriage of each airplane. A second sensor for sensing whether the safety pins and pitot tube sleeves exist in the slots and an alarm are arranged in the detection box. When the aircraft removed, first sensor can detect whether the aircraft will take off promptly, and the second sensor can detect whether safety pin and pitot tube sleeves are retrieved to the detection case and sends alarm.

Furthermore, the document US 2021/0206512 A1 describes an indicating marker and a method of use for removably attaching the indicating marker to an aircraft comprising an opening. The indicating marker comprises a cover device configured to removably seal the opening of the aircraft to prevent foreign contaminants from entering and getting inside the opening. At least one light is attached to the cover device. A power source is electrically connectable to the at least one light to emit a visible light from the at least one light and illuminate the cover device. Alternatively, a wireless signal emitter may be attached to the cover device and configured to receive a signal from a wireless signal receiver separate from the aircraft and transmit a wireless response signal to the wireless signal receiver. In one example, both a light and a wireless signal emitter are attached to the cover device.

Still other visible alerting means are known from completely different technical domains. For instance, it is known to provide brake disc lockers of motorbikes with so-called reminder cables.

Based on the limitations and drawbacks of the prior art, an object of the present invention is to provide a new ground support equipment system which comprises a plurality of ground support equipment modules mountable to associated aircraft components of an aircraft parked on ground, wherein respectively mounted ground support equipment modules may securely and reliably be noticed by a pilot of the aircraft during pre-flight check. It is a further object of the present invention to provide an aircraft configured for use with such a ground support equipment system, as well as a method of mounting such a ground support equipment system to an aircraft parked on ground.

This object is solved by a ground support equipment system for use on an aircraft, said ground support equipment system comprising the features of claim 1. More specifically, a ground support equipment system for use on an aircraft is provided, comprising a plurality of ground support equipment modules, at least one common interconnection device, and a plurality of connecting means. The plurality of ground support equipment modules is mountable to associated aircraft components of an aircraft parked on ground for protecting the associated aircraft components from environmental conditions, in particular rain, wind, snow, frost, sand, and/or salt conditions. The at least one common interconnection device is for rendering mounting of the plurality of ground support equipment modules to the associated aircraft components discernible for a pilot of the aircraft The plurality of connecting means connects the plurality of ground support equipment modules to the at least one common interconnection device, wherein the plurality of connecting means comprises at least one physical wire, and wherein the at least one common interconnection device comprises a suitable wire fixation that is adapted for being provided at a door handle of a cockpit access door of the aircraft for attaching the at least one physical wire.

Advantageously, by connecting the plurality of ground support equipment modules to the at least one common interconnection device, mounting of the plurality of ground support equipment modules to the associated aircraft components may securely and reliably be rendered discernible for a pilot of the aircraft, in particular during a pre-flight check of the pilot. Accordingly, ground support equipment modules which are still mounted on the aircraft during the pre-flight check of the pilot may easily and comfortably be detected. Thus, the pilots may initiate removal of such ground support equipment modules at the latest during pre-flight check such that incidents due to mounted ground support equipment modules which are not removed during such a pre-flight check of the pilot may beneficially be avoided.

For instance, all ground support equipment modules may be linked by associated physical wires or wireless connections to an analogue or digital component that is located at a position on the aircraft or close to the aircraft that may not be overlooked by the pilot in pre-flight check. Thus, the associated physical wires or wireless connections form the plurality of connecting means. Accordingly, it allows to render all ground support equipment modules which must be removed before engine start and/or take off more easily discernible. This simplifies and accelerates pre-flight check and reduces respective pilot tasks prior to ground run or flight operation.

Advantageously, following human factors analysis other cognitive senses, such as acoustic, touch, etc., and not only visual discernibility, may be considered when alerting the pilot. Thus, human failure risks may be reduced significantly.

If physical wires form the plurality of connecting means, they may e. g. be linked to an aircraft command, such as a door handle or, in a rotary wing aircraft, a cyclic pilots command. Furthermore, or instead, an adapter/box may enable connection of several physical wires. Thus, at least all physical wires with a "Remove before Flight" status are immediately visible in a single adapter/box to the pilots before they start ground run or flight operation of the aircraft. By way of example, a snap lock concept may be used to quickly fix or remove a connected physical wire from the adapter/box.

Moreover, the adapter/box may be equipped with an electrical detection system that is configured to provide information concerning the status of connected ground support equipment modules. Thus, the pilot may securely and reliably be informed if respective ground support equipment modules are still mounted on the aircraft and should be removed prior to ground run or flight operation, e. g. by means of suitable visible or acoustic alerts.

The adapter/box may be connected via a cable or by means of a wireless link to associated pilot controls. For instance, the adapter/box may be connected via a wireless link to the multi-function display panel of the pilot.

If wireless connections form the plurality of connecting means, each ground support equipment module of the plurality of ground support equipment modules may e. g. be provided with an associated radio frequency identification (RFID) module, such as a RFID chip. Each such RFID chip may be detectable by means of an associated RFID module detection antenna. The latter may be connected to an aircraft control system that may be configured such that e. g. a start of the engine(s) is prevented as long as the RFID module detection antenna still detects RFID chips.

Moreover, collected information on the respectively detected RFID chips may alternatively, or in addition, be monitored remotely. This enables big data management of a respective aircraft fleet of one or more customers.

Advantageously, all ground support equipment modules which are equipped with RFID chips may be stored in a storage pocket onboard the aircraft, e. g. in a respective cargo area of the aircraft, during ground run and/or flight operation. Preferably, the storage pocket comprises radio frequency isolated surfaces such that the RFID chips stored in the storage pocket may not be detected by the RFID module detection antenna. More specifically, the storage pocket may be made of one or more aluminium foils inside, e. g. based on credit card technology.

According to some aspects, the at least one common interconnection device comprises a collector box to which the plurality of connecting means is attachable.

Preferably, the plurality of connecting means is attachable to the collector box via a plurality of associated snap lock connections.

According to some aspects, the at least one physical wire is a cable or cord.

Preferably, the collector box is connectable to a pilot alerting system of the aircraft parked on ground, in particular to a multi-function display panel, for indicating to a pilot of the aircraft whether one or more connecting means of the plurality of connecting means are attached to the collector box.

Preferably, the collector box is connectable via a wireless signal to the pilot alerting system of the aircraft parked on ground.

According to some aspects, the plurality of connecting means comprises a plurality of wireless connectors.

Preferably, the plurality of wireless connectors comprises a plurality of radio frequency identification modules.

According to some aspects, the ground support equipment system further comprises a storage pocket that is provided for storage of the plurality of ground support equipment modules and the plurality of connecting means onboard an aircraft, in particular during flight operation, wherein the storage pocket comprises radio frequency isolated surfaces.

The present invention further relates to an aircraft comprising a ground support equipment system as described above, wherein the plurality of connecting means comprise a plurality of radio frequency identification modules; wherein the aircraft comprises a detection antenna that is configured for detecting presence of the plurality of radio frequency identification modules.

Preferably, the detection antenna is linked to an aircraft control system configured to prevent engine start of the aircraft upon detection of presence of one or more of the plurality of radio frequency identification modules.

Preferably, the aircraft further comprises a storage pocket that is provided for storage of the plurality of ground support equipment modules and the plurality of connecting means onboard an aircraft, in particular during flight operation, wherein the storage pocket comprises radio frequency isolated surfaces.

The present invention further relates to a method of mounting a ground support equipment system as described above to an aircraft parked on ground. The method comprises mounting a plurality of ground support equipment modules to associated aircraft components of the aircraft for protecting the associated aircraft components from environmental conditions, in particular rain, wind, snow, frost, sand, and/or salt conditions; and connecting a plurality of connecting means that is connected to the plurality of ground support equipment modules to at least one common interconnection device for rendering mounting of the plurality of ground support equipment modules to the associated aircraft components discernible for a pilot of the aircraft wherein the connecting of the plurality of connecting means (200) comprises connecting at least one physical wire (202, 204, 206, 208) to a suitable wire fixation (203) of the at least one common interconnection device (212) that is adapted for being provided at a door handle (212) of a cockpit access door (210) of the aircraft.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 and Figure 2 show perspective views of an illustrative aircraft with a ground support equipment system according to the present invention, and
- Figure 3 to Figure 6 show different partial views of the illustrative aircraft of Figure 1 and Figure 2 with the ground support equipment system in accordance with some aspects.

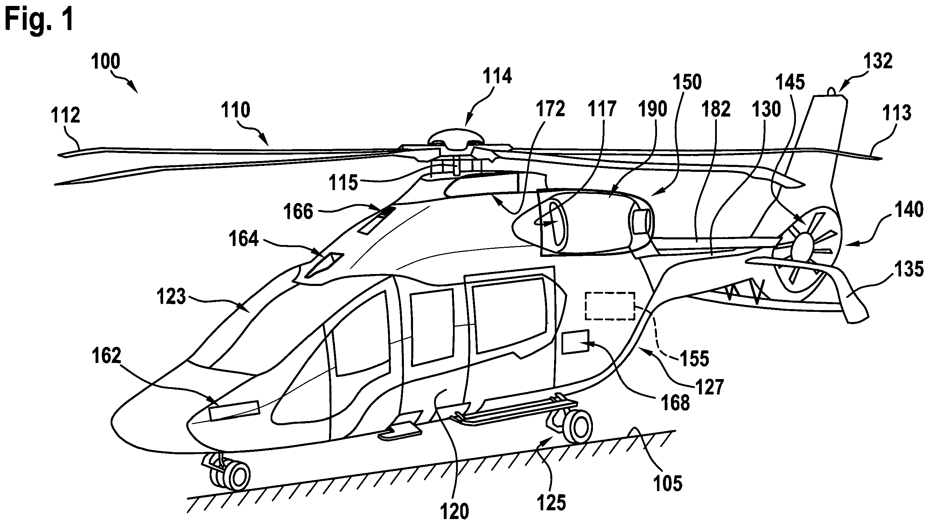

Figure 1 shows an illustrative aircraft 100. By way of example, the aircraft 100 is embodied as a rotary wing aircraft and, more particularly, as a helicopter. Thus, for purposes of simplicity and clarity, the aircraft 100 is hereinafter referred to as the "helicopter 100". However, the present invention is likewise applicable to other types of aircrafts, such as airplanes, multicopters, and so on, and may even be used in spacecrafts.

The helicopter 100 comprises preferably at least one main rotor 110 with a rotor shaft 115. By way of example, the at least one main rotor 110 is embodied as a multi-blade rotor system, for providing lift and forward or backward thrust during operation. Accordingly, the at least one main rotor 110 comprises a plurality of rotor blades 112, 113 which are e. g. mounted at an associated rotor head 114 to the rotor shaft 115. The at least one main rotor 110 is preferably powered by at least one engine 117.

Illustratively, the helicopter 100 has a fuselage 120 that forms an airframe of the helicopter 100. The fuselage 120 may be connected to a suitable landing gear 125 and forms, by way of example, a cabin 123 and a rear fuselage 127. The rear fuselage 127 is illustratively connected to a tail boom 130. The landing gear 125 is illustratively embodied as a wheel-type landing gear.

By way of example, the helicopter 100 includes at least one counter-torque device 140 configured to provide counter-torque during operation, i.e. to counter the torque created by rotation of the at least one main rotor 110 for purposes of balancing the helicopter 100 in terms of yaw. If desired, counter-torque device 140 may be shrouded as shown.

The at least one counter-torque device 140 is illustratively provided at an aft section of the tail boom 130 and comprises a tail rotor 145, which may also be powered by the at least one engine 117. The aft section of the tail boom 130 further comprises a fin 132. Moreover, the tail boom 130 of the helicopter 100 is also provided with a suitable horizontal stabilizer 135.

Illustratively, the helicopter 100 is parked on ground 105. However, when being parked on ground 105 as illustrated, specific aircraft components of the helicopter 100 are preferably protected by means of a suitable ground support equipment system 150. According to one aspect, the ground support equipment system 150 may be stored in a storage pocket 155 onboard the helicopter 100, in particular during flight operation, wherein the storage pocket 155 preferentially comprises radio frequency isolated surfaces.

Preferably, the ground support equipment system 150 comprises a plurality of ground support equipment modules mountable to associated aircraft components of the helicopter 100 parked on ground 105 for protecting the associated aircraft components from environmental conditions, in particular rain, wind (up to 20 KT), snow, frost, sand, and/or salt conditions, but even from exhaustive solar irradiation (UV radiation). Illustrative ground support equipment modules are - in Figure 1 - only shown by schematically indicating associated mounting positions on the helicopter 100, but without illustrating the ground support equipment modules as such in greater detail, as they are well-known to the person skilled in the art.

By way of example, the plurality of ground support equipment modules comprises one or more pitot sensors covers 162, one or more environmental control system air intake covers 164, 166, 168, one or more starter generator and air-cooled oil cooler air inlet blanking caps 172, one or more drive shaft flange protections 182, as well as one or more engine blanks and covers 190. Each one of these ground support equipment modules is preferably designed so as to require handling by not more than two operators. Moreover, they are preferably easy set-up, especially if the operator is equipped with thick gloves, e. g. due to winter condition.

Furthermore, an underlying weight of these ground support equipment modules preferably complies with currently applicable ergonomic standards and associated attachment means preferentially include suitable protections. Moreover, these ground support equipment modules are preferably compatible with the fully equipped helicopter 100 and they are water proof facing natural water runoff. More particularly, these ground support equipment modules are preferably designed in order to avoid any hazardous object to enter into a respectively protected area and to avoid any damage on associated interface parts, such that the latter do not endure premature wear, such as scratches, markings, deformation, and so on.

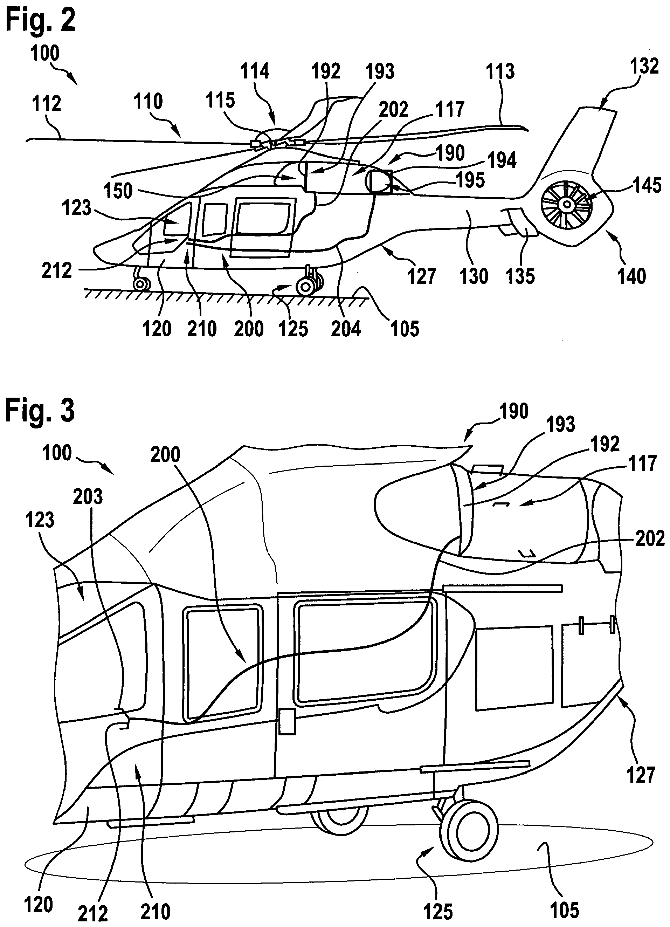

Figure 2 shows the helicopter 100 of Figure 1, which is parked on ground 105 and provided with the ground support equipment system 150. However, for simplicity and clarity of the drawing only two ground support equipment modules of the plurality of ground support equipment modules of the ground support equipment system 150 are, by way of example, separately labelled with the reference signs 192, 194.

More specifically, the ground support equipment modules 192, 194 comprise one or more engine air intake blanks 192, and one or more exhaust ejector covers 194. The one or more engine air intake blanks 192 and the one or more exhaust ejector covers 194 are associated with the engine blanks and covers 190 of Figure 1. By way of example, one engine air intake blank 192 is provided for protecting an associated engine air intake 193 from environmental conditions, in particular rain, wind, snow, frost, sand, and/or salt conditions, and one exhaust ejector cover 194 is provided for protecting an associated exhaust ejector 195 from environmental conditions, in particular rain, wind, snow, frost, sand, and/or salt conditions.

Illustratively, the plurality of ground support equipment modules is connected via a plurality of connecting means 200 to at least one common interconnection device for rendering mounting of the plurality of ground support equipment modules discernible, in particular for a pilot of the helicopter 100. By way of example, the engine air intake blank 192 is provided with a connecting means 202 and the exhaust ejector cover 194 is provided with a connecting means 204. The connecting means 202, 204 of the plurality of connecting means 200 may e. g. be embodied as physical wires, such as cables or cords.

The connecting means 202, 204 of the plurality of connecting means 200 may e. g. be attached to a door handle 212 of a cockpit access door 210 of the helicopter 100. In this case the door handle 212 forms the common interconnection device. However, other common interconnection devices may likewise be used. For instance, the connecting means 202, 204 may e. g. be attached to an aircraft command of the helicopter 100, in particular to a pilot command, and so on.

Furthermore, two or more common interconnection devices may be used to prevent overcharging of a single common interconnection device. Thus, the connecting means 202 may e. g. be attached to the door handle 212, whereas the connecting means 204 is attached to a pilot command, and so on. Nevertheless, use of a single common interconnection device is preferred.

From the above described configuration, a method of mounting the ground support equipment system 150 to the helicopter 100 parked on ground 105 may be derived. This method preferably comprises at least the steps of: mounting the plurality of ground support equipment modules, e. g. the ground support equipment modules 192, 194, to associated aircraft components, e. g. the engine air intake 193 and the exhaust ejector 195, of the helicopter 100 for protecting the associated aircraft components from environmental conditions, in particular rain, wind, snow, frost, sand, and/or salt conditions; and connecting the plurality of connecting means 200 that is connected to the plurality of ground support equipment modules to the at least one common interconnection device, e. g. the door handle 212, for rendering mounting of the plurality of ground support equipment modules to the associated aircraft components discernible for a pilot of the helicopter 100.

Figure 3 shows a section of the helicopter 100 of Figure 2 parked on ground 105, for further illustrating the engine air intake blank 192 that is provided for protecting the associated engine air intake 193 from environmental conditions, in particular rain, wind, snow, frost, sand, and/or salt conditions. The engine air intake blank 192 is shown in greater detail representative for all ground support equipment modules of the ground support equipment system 150 of Figure 2, which is otherwise not further illustrated, for simplicity and clarity of the drawing.

As described above at Figure 2, the engine air intake blank 192 is connected via the connecting means 202 of the plurality of connecting means 200 to the door handle 212 of the cockpit access door 210 of the helicopter 100. In order to simplify attachment of the connecting means 202, which is illustratively embodied as a physical wire in the form of a cable, to the door handle 212, a suitable wire fixation 203 may be provided at the door handle 212.

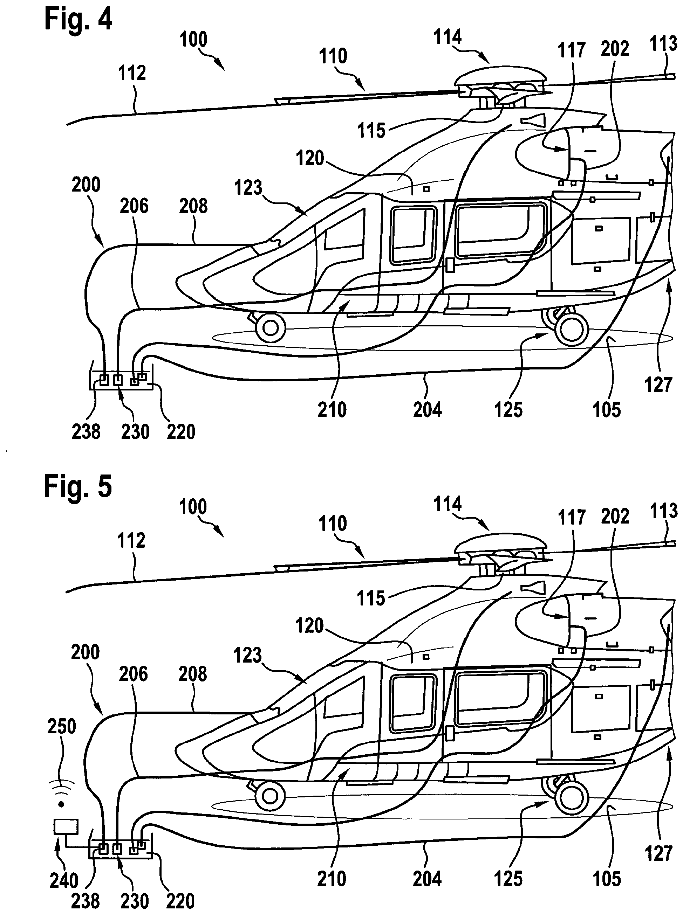

Figure 4 shows a section of the helicopter 100 of Figure 2 parked on ground 105, with the plurality of connecting means 200, for illustrating interconnection of the plurality of connecting means 200 via a collector box 220 that, in contrast to Figure 2, now forms the common interconnection device. By way of example, the plurality of connecting means 200 comprises the connecting means 202, 204 of Figure 2, and two additional connecting means 206, 208.

Illustratively, all connecting means 202, 204, 206, 208 are embodied as physical wires in the form of cables and connected to associated ground support equipment modules of the plurality of ground support equipment modules of the ground support equipment system 150 of Figure 2. However, for simplicity and clarity of the drawing these ground support equipment modules are not further illustrated in Figure 4 and reference is made to Figure 2 and Figure 3.

The plurality of connection means 200 may be attachable to the collector box 220 via a plurality of associated snap lock connections 230. More specifically, each one of the connecting means 202, 204, 206, 208 is preferably attachable to the collector box 230 via a separate snap lock connection. By way of example, and representative for all connecting means 202, 204, 206, 208, the connecting means 208 is attached to the collector box 230 via an associated snap lock connection 238.

Figure 5 shows the section of the helicopter 100 parked on ground 105 according to Figure 4, with the plurality of connecting means 200 that comprises the illustrative connecting means 202, 204, 206, 208 which are interconnected via the collector box 220. In contrast to Figure 4, the collector box 220 is now connectable to a pilot alerting system of the helicopter 100 parked on ground 105, e. g. to a multi-function display panel, for indicating to a pilot of the helicopter 100 whether one or more connecting means 202, 204, 206, 208 of the plurality of connecting means 200 are attached to the collector box 220. For instance, the collector box 220 may be connectable via a wireless signal 250 to the pilot alerting system. The wireless signal 250 may illustratively be emitted via a suitable communication device 240.

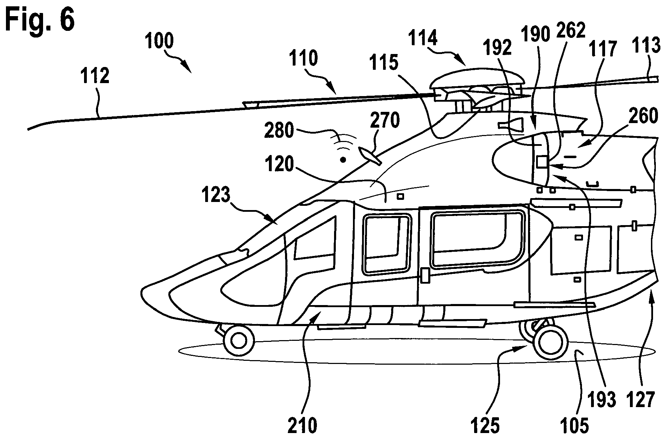

Figure 6 shows a section of the helicopter 100 of Figure 2 parked on ground 105. However, in contrast to Figure 2 the plurality of connecting means 200 of Figure 2 is now embodied by a plurality of wireless connectors 260 instead of the physical wires. The plurality of wireless connectors 260 may e. g. comprise, or be embodied as, a plurality of radio frequency identification (RFID) modules.

By way of example, the plurality of RIFD modules 260 comprises a RFID module 262 that is associated with, and mounted to, the engine air intake blank 192 of Figure 2. The engine air intake blank 192 and the RFID module 262 are shown representative for all ground support equipment modules which are provided with RFID modules, for simplicity and clarity of the drawing.

Illustratively, the helicopter 100 comprises a detection antenna 270 that is configured for detecting presence of the plurality of RFID modules 260. For instance, the detection antenna 270 may detect presence of the plurality of RFID modules 260 through receipt of associated RFID signals 280 emitted from the plurality of RFID modules 260.

Preferably, the detection antenna 270 is linked to an aircraft control system of the helicopter 100. The aircraft control system may be configured to prevent engine start of the helicopter 100 upon detection of presence of one or more of the plurality of RFID modules 260. In other words, as long as the aircraft control system detects RFID modules of the plurality of RFID modules 260, it may be assumed that associated ground support equipment modules of the plurality of ground support equipment modules of the ground support equipment system 250 of Figure 2 are mounted to the helicopter 100 and that engine start should, therefore, be prevented.

If desired, instead of providing the ground support equipment system either with physical wires, or with RFID modules, a mix of both may be provided. Thus, particularly critical ground support equipment modules may e. g. be provided with RFID modules to enable prevention of an engine start as described above, whereas less critical ground support equipment modules may e. g. merely be provided with physical wires, and so on.

### Reference List

100 aircraft
105 ground
110 main rotor
112, 113 rotor blades
114 rotor head
115 rotor shaft
117 aircraft engine
120 fuselage
123 cockpit
125 wheel-type landing gear
127 rear fuselage
130 tail boom
132 fin
135 horizontal stabilizer
140 counter-torque device
145 tail rotor
150 ground support equipment system
155 storage pocket
162 pitot sensors covers
164, 166, 168 environmental control system air intake covers
172 starter generator and air-cooled oil cooler air inlet blanking cap
182 drive shaft flange protection
190 engine blanks and covers
192 engine air intake blank
193 engine air intake
194 exhaust ejector cover
195 exhaust ejector
200 plurality of connecting means
202, 204, 206, 208 physical wires
203 wire fixation
210 cockpit access door
212 door handle
220 collector box
230 plurality of snap lock connections
238 individual snap lock connection
240 communication device
250 wireless signal
260 plurality of radio frequency identification modules
262 individual radio frequency identification module
270 radio frequency identification module detection antenna
280 radio frequency identification signal

## Claims

1. A ground support equipment system (150) for use on an aircraft (100), comprising:
a plurality of ground support equipment modules (192, 194) mountable to associated aircraft components (193, 195) of an aircraft (100) parked on ground (105) for protecting the associated aircraft components (193, 195) from environmental conditions, in particular rain, wind, snow, frost, sand, and/or salt conditions;
at least one common interconnection device (212) for rendering mounting of the plurality of ground support equipment modules (162, 164, 166, 168, 172, 182, 192, 194) to the associated aircraft components (193, 195) discernible for a pilot of the aircraft (100); and
a plurality of connecting means (200) that connects the plurality of ground support equipment modules (162, 164, 166, 168, 172, 182, 192, 194) to the at least one common interconnection device (212), **characterized in that** the plurality of connecting means (200) comprises at least one physical wire (202, 204, 206, 208), and wherein the at least one common interconnection device (212) comprises a suitable wire fixation (203) that is adapted for being provided at a door handle (212) of a cockpit access door (210) of the aircraft (100) for attaching the at least one physical wire (202, 204, 206, 208).

2. The ground support equipment system (150) of claim 1, wherein the at least one common interconnection device comprises a collector box (220) to which the plurality of connecting means (200) is attachable.

3. The ground support equipment system (150) of claim 2, wherein the plurality of connecting means (200) is attachable to the collector box (220) via a plurality of associated snap lock connections (230).

4. The ground support equipment system (150) of any one of the preceding claims, wherein the at least one physical wire (202, 204, 206, 208) is a cable or cord.

5. The ground support equipment system (150) of any one of claims 3 to 5, wherein the collector box (220) is connectable to a pilot alerting system of the aircraft (100) parked on ground (105), in particular to a multi-function display panel, for indicating to a pilot of the aircraft (100) whether one or more connecting means (202, 204, 206, 208) of the plurality of connecting means (200) are attached to the collector box (220).

6. The ground support equipment system (150) of claim 5, wherein the collector box (220) is connectable via a wireless signal (250) to the pilot alerting system of the aircraft (100) parked on ground (105).

7. The ground support equipment system (150) of any one of the preceding claims, wherein the plurality of connecting means (200) comprises a plurality of wireless connectors (260).

8. The ground support equipment system (150) of claim 7, wherein the plurality of wireless connectors comprises a plurality of radio frequency identification modules (260).

9. The ground support equipment system (150) of any one of the preceding claims, further comprising a storage pocket (155) that is provided for storage of the plurality of ground support equipment modules (192, 194) and the plurality of connecting means (200) onboard an aircraft (100), in particular during flight operation, wherein the storage pocket (155) comprises radio frequency isolated surfaces.

10. An aircraft (100) comprising the ground support equipment system (150) of any one of the preceding claims, wherein the plurality of connecting means (200) comprise a plurality of radio frequency identification modules (260), and wherein the aircraft (100) comprises a detection antenna (270) that is configured for detecting presence of the plurality of radio frequency identification modules (260).

11. The aircraft (100) of claim 10, wherein the detection antenna (270) is linked to an aircraft control system configured to prevent engine start of the aircraft (100) upon detection of presence of one or more of the plurality of radio frequency identification modules (260).

12. The aircraft (100) of claim 10 or 11, further comprising a storage pocket (155) that is provided for storage of the plurality of ground support equipment modules (192, 194) and the plurality of connecting means (200) onboard an aircraft (100), in particular during flight operation, wherein the storage pocket (155) comprises radio frequency isolated surfaces.

13. A method of mounting a ground support equipment system (150) according to any one of claims 1 to 9 to an aircraft (100) parked on ground (105), comprising:
mounting a plurality of ground support equipment modules (192, 194) to associated aircraft components (193, 195) of the aircraft (100) for protecting the associated aircraft components (193, 195) from environmental conditions, in particular rain, wind, snow, frost, sand, and/or salt conditions; and
connecting a plurality of connecting means (200) that is connected to the plurality of ground support equipment modules (162, 164, 166, 168, 172, 182, 192, 194) to at least one common interconnection device (212) for rendering mounting of the plurality of ground support equipment modules (162, 164, 166, 168, 172, 182, 192, 194) to the associated aircraft components (193, 195) discernible for a pilot of the aircraft (100) **characterized in that**:
the connecting of the plurality of connecting means (200) comprises connecting at least one physical wire (202, 204, 206, 208) to a suitable wire fixation (203) of the at least one common interconnection device (212) that is adapted for being provided at a door handle (212) of a cockpit access door (210) of the aircraft (100).

## Patentansprüche

1. Bodenunterstützungsausrüstungssystem (150) zur Verwendung an einem Luftfahrzeug (100), umfassend:
eine Mehrzahl von Bodenunterstützungsausrüstungsmodulen (192, 194), die an zugeordneten Luftfahrzeugkomponenten (193, 195) eines am Boden (105) geparkten Luftfahrzeugs (100) montierbar sind, um die zugeordneten Luftfahrzeugkomponenten (193, 195) vor Umgebungsbedingungen, insbesondere Regen, Wind, Schnee, Frost, Sand und/oder Salz, zu schützen;
mindestens eine gemeinsame Verbindungsvorrichtung (212), um die Anbringung der Mehrzahl von Bodenausrüstungsmodulen (162, 164, 166, 168, 172, 182, 192, 194) an den zugeordneten Luftfahrzeugkomponenten (193, 195) für einen Piloten des Luftfahrzeugs (100) erkennbar zu machen; und
eine Mehrzahl von Verbindungsmitteln (200), die die Mehrzahl von Bodenunterstützungsausrüstungsmodulen (162, 164, 166, 168, 172, 182, 192, 194) mit der mindestens einen gemeinsamen Verbindungsvorrichtung (212) verbinden, **dadurch gekennzeichnet, dass** die Mehrzahl von Verbindungsmitteln (200) mindestens einen physischen Draht (202, 204, 206, 208) umfasst, und wobei die mindestens eine gemeinsame Verbindungsvorrichtung (212) eine geeignete Drahtbefestigung (203) umfasst, die eingerichtet ist, um an einem Türgriff (212) einer Cockpit-Zugangstür (210) des Luftfahrzeugs (100) angebracht zu werden, um den mindestens einen physischen Draht (202, 204, 206, 208) zu befestigen.

2. Bodenunterstützungsausrüstungssystem (150) nach Anspruch 1, bei dem die mindestens eine gemeinsame Verbindungsvorrichtung eine Sammelbox (220) umfasst, an der die Mehrzahl von Verbindungsmitteln (200) befestigbar ist.

3. Bodenunterstützungsausrüstungssystem (150) nach Anspruch 2, bei dem die Mehrzahl von Verbindungsmitteln (200) über eine Mehrzahl von zugeordneten Schnappverbindungen (230) an der Sammelbox (220) befestigbar ist.

4. Bodenunterstützungsausrüstungssystem (150) nach einem der vorhergehenden Ansprüche, bei dem der mindestens eine physische Draht (202, 204, 206, 208) ein Kabel oder eine Schnur ist.

5. Bodenunterstützungsausrüstungssystem (150) nach einem der Ansprüche 3 bis 5, bei dem die Sammelbox (220) mit einem Pilotenwarnsystem des am Boden (105) geparkten Luftfahrzeugs (100) verbindbar ist, insbesondere mit einem Multifunktionsanzeigefeld, um einem Piloten des Luftfahrzeugs (100) anzuzeigen, ob eine oder mehrere Verbindungsmittel (202, 204, 206, 208) aus der Mehrzahl von Verbindungsmitteln (200) an der Sammelbox (220) angebracht sind.

6. Bodenunterstützungsausrüstungssystem (150) nach Anspruch 5, bei dem die Sammelbox (220) über ein drahtloses Signal (250) mit dem Pilotenwarnsystem des am Boden (105) geparkten Luftfahrzeugs (100) verbindbar ist.

7. Bodenunterstützungsausrüstungssystem (150) nach einem der vorhergehenden Ansprüche, bei dem die Mehrzahl von Verbindungsmitteln (200) eine Mehrzahl von drahtlosen Verbindungselementen (260) umfasst.

8. Bodenunterstützungsausrüstungssystem (150) nach Anspruch 7, bei dem die Mehrzahl von drahtlosen Verbindungselementen eine Mehrzahl von RFID-Modulen (260) umfasst.

9. Bodenunterstützungsausrüstungssystem (150) nach einem der vorhergehenden Ansprüche, ferner umfassend eine Aufbewahrungstasche (155), die zur Aufbewahrung der Mehrzahl von Bodenunterstützungsausrüstungsmodulen (192, 194) und der Mehrzahl von Verbindungsmitteln (200) an Bord eines Luftfahrzeugs (100), insbesondere während des Flugbetriebs, vorgesehen ist, wobei die Aufbewahrungstasche (155) hochfrequenzisolierte Oberflächen umfasst.

10. Luftfahrzeug (100), umfassend das Bodenunterstützungsausrüstungssystem (150) nach einem der vorhergehenden Ansprüche, wobei die Mehrzahl von Verbindungsmitteln (200) eine Mehrzahl von RFID-Modulen (260) umfasst, und wobei das Luftfahrzeug (100) eine Detektionsantenne (270) umfasst, die zum Detektieren des Vorhandenseins der Mehrzahl von RFID-Modulen (260) konfiguriert ist.

11. Luftfahrzeug (100) nach Anspruch 10, bei dem die Detektionsantenne (270) mit einem Luftfahrzeugsteuerungssystem verbunden ist, das konfiguriert ist, um den Start des Triebwerks des Luftfahrzeugs (100) bei Detektion der Anwesenheit eines oder mehrerer der Mehrzahl von RFID-Modulen (260) zu verhindern.

12. Luftfahrzeug (100) nach Anspruch 10 oder 11, ferner umfassend eine Aufbewahrungstasche (155), die zur Aufbewahrung der Mehrzahl von Bodenunterstützungsausrüstungsmodulen (192, 194) und der Mehrzahl von Verbindungsmitteln (200) an Bord eines Luftfahrzeugs (100), insbesondere während des Flugbetriebs, vorgesehen ist, wobei die Aufbewahrungstasche (155) hochfrequenzisolierte Oberflächen umfasst.

13. Verfahren zum Anbringen eines Bodenunterstützungsausrüstungssystems (150) nach einem der Ansprüche 1 bis 9 an einem am Boden (105) geparkten Luftfahrzeug (100), mit den Schritten:
Anbringen einer Mehrzahl von Bodenunterstützungsausrüstungsmodulen (192, 194) an zugeordneten Luftfahrzeugkomponenten (193, 195) des Luftfahrzeugs (100), um die zugeordneten Luftfahrzeugkomponenten (193, 195) vor Umgebungsbedingungen, insbesondere Regen, Wind, Schnee, Frost, Sand und/oder Salz, zu schützen; und
Verbinden einer Mehrzahl von Verbindungsmitteln (200), die mit der Mehrzahl von Bodenunterstützungsausrüstungsmodulen (162, 164, 166, 168, 172, 182, 192, 194) verbunden sind, mit mindestens einer gemeinsamen Verbindungsvorrichtung (212), um die Anbringung der Mehrzahl von Bodenunterstützungsausrüstungsmodulen (162, 164, 166, 168, 172, 182, 192, 194) an den zugeordneten Luftfahrzeugkomponenten (193, 195) für einen Piloten des Luftfahrzeugs (100) erkennbar zu machen, **dadurch gekennzeichnet, dass**:
das Verbinden der Mehrzahl von Verbindungsmitteln (200) das Verbinden mindestens eines physischen Drahtes (202, 204, 206, 208) mit einer geeigneten Drahtbefestigung (203) der mindestens einen gemeinsamen Verbindungsvorrichtung (212) umfasst, die eingerichtet ist, um an einem Türgriff (212) einer Cockpit-Zugangstür (210) des Luftfahrzeugs (100) angebracht zu werden.

## Revendications

1. Système (150) d'équipement d'assistance au sol pour une utilisation sur un aéronef (100), comprenant :
une pluralité de modules (192, 194) d'équipement d'assistance au sol aptes à être montés sur des composants (193, 195) d'aéronef associés d'un aéronef (100) stationné au sol (105) afin de protéger les composants (193, 195) d'aéronef associés des aléas environnementaux, en particulier des aléas liés à la pluie, au vent, à la neige, au gel, au sable et/ou à la salinité ;
au moins un dispositif (212) d'interconnexion commun pour permettre à un pilote de l'aéronef (100) de distinguer le montage de la pluralité de modules (162, 164, 166, 168, 172, 182, 192, 194) d'équipement d'assistance au sol sur les composants (193, 195) d'aéronef associés ; et
une pluralité de moyens (200) de connexion qui connecte les modules (162, 164, 166, 168, 172, 182, 192, 194) d'équipement d'assistance au sol audit au moins un dispositif (212) d'interconnexion commun, **caractérisé en ce que** la pluralité de moyens (200) de connexion comprend au moins un câble (202, 204, 206, 208) physique, et dans lequel ledit au moins un dispositif (212) d'interconnexion commun comprend une fixation (203) de câble appropriée qui est apte à être installée à l'emplacement d'une poignée (212) de porte d'une porte (210) d'accès au cockpit de l'aéronef (100) pour la fixation dudit au moins un câble (202, 204, 206, 208) physique.

2. Système (150) d'équipement d'assistance au sol selon la revendication 1, dans lequel ledit au moins un dispositif d'interconnexion commun comprend un boîtier (220) collecteur sur lequel la pluralité de moyens (200) de connexion est fixée.

3. Système (150) d'équipement d'assistance au sol selon la revendication 2, dans lequel la pluralité de moyens (200) de connexion est apte à être fixée sur le boîtier (220) collecteur via une pluralité de connecteurs (230) à verrouillage rapide.

4. Système (150) d'équipement d'assistance au sol selon l'une quelconque des revendications précédentes, dans lequel ledit au moins un câble (202, 204, 206, 208) physique est un câble ou un cordon.

5. Système (150) d'équipement d'assistance au sol selon l'une quelconque des revendications 3 à 5, dans lequel le boîtier (220) collecteur est apte à être connecté à un système d'alerte de pilote de l'aéronef (100) stationné au sol (105), en particulier à un panneau d'affichage multifonctions, pour indiquer à un pilote de l'aéronef (100) si un ou plusieurs moyens (202, 204, 206, 208) de connexion parmi la pluralité de moyens (200) de connexion sont fixés sur le boîtier (220) collecteur.

6. Système (150) d'équipement d'assistance au sol selon la revendication 5, dans lequel le boîtier (220) collecteur est apte à être connecté au système d'alerte du pilote de l'aéronef (100) stationné au sol (105) via un signal (250) sans fil.

7. Système (150) d'équipement d'assistance au sol selon l'une quelconque des revendications précédentes, dans lequel la pluralité de moyens (200) de connexion comprend une pluralité de connecteurs (260) sans fil.

8. Système (150) d'équipement d'assistance au sol selon la revendication 7, dans lequel la pluralité de connecteurs sans fil comprend une pluralité de modules (260) de radio-identification.

9. Système (150) d'équipement d'assistance au sol selon l'une quelconque des revendications précédentes, comprenant en outre un compartiment (155) de stockage qui est prévu pour stocker la pluralité de modules (192, 194) d'équipement d'assistance au sol et la pluralité de moyens (200) de connexion à bord d'un aéronef (100), en particulier durant le fonctionnement en vol, dans lequel le compartiment (155) de stockage comprend des surfaces interdisant le passage des ondes radio.

10. Aéronef (100) comprenant le système (150) d'équipement d'assistance au sol selon l'une quelconque des revendications précédentes, dans lequel la pluralité de moyens (200) de connexion comprend une pluralité de modules (260) de radio-identification, et dans lequel l'aéronef (100) comprend une antenne (270) de détection qui est configurée pour détecter la présence de la pluralité de modules (260) de radio-identification.

11. Aéronef (100) selon la revendication 10, dans lequel l'antenne (270) de détection est reliée à un système de contrôle d'aéronef configuré pour empêcher le démarrage du moteur de l'aéronef lorsque la présence d'un ou plusieurs modules (260) de radio-identification est détectée.

12. Aéronef (100) selon la revendication 10 ou 11, comprenant en outre un compartiment (155) de stockage qui est prévu pour stocker la pluralité de modules (192, 194) d'équipement et la pluralité de moyens (200) de connexion à bord d'un aéronef (100), en particulier durant le fonctionnement en vol, dans lequel le compartiment (155) de stockage comprend des surfaces interdisant le passage des ondes radio.

13. Procédé de montage d'un système (150) d'équipement d'assistance au sol selon l'une quelconque des revendications 1 à 9 sur un aéronef (100) stationné au sol (105) prévoyant de :
monter une pluralité de modules (192, 194) d'équipement d'assistance au sol sur des composants (193, 195) d'aéronef associés de l'aéronef (100) afin de protéger les composants (193, 195) d'aéronef associés des aléas environnementaux, en particulier des aléas liés à la pluie, au vent, à la neige, au gel, au sable et/ou à la salinité ; et
connecter une pluralité de moyens (200) de connexion qui est connectée à la pluralité de modules (162, 164, 166, 168, 172, 182, 192, 194) d'équipement d'assistance au sol audit au moins un dispositif (212) d'interconnexion commun pour permettre à un pilote de l'aéronef (100) de distinguer le montage de la pluralité de modules (162, 164, 166, 168, 172, 182, 192, 194) d'équipement d'assistance au sol sur les composants (193, 195) d'aéronef associés, **caractérisé en ce que** :
la connexion de la pluralité des moyens (200) de connexion prévoit de connecter au moins un câble (202, 204, 206, 208) physique à une fixation de câble appropriée dudit au moins un dispositif (212) d'interconnexion commun qui est adapté pour être installé à l'emplacement d'une poignée (212) de porte d'une porte (210) d'accès au cockpit de l'aéronef (100).
